# EUROPÄISCHE PATENTSCHRIFT

(11) **EP 2 701 983 B1**
(45) Veröffentlichungstag und Bekanntmachung des Hinweises auf die Patenterteilung: **29.06.2016**
(21) Anmeldenummer: 12707557.0
(22) Anmeldetag: 02.03.2012
(51) Int. Cl.: B65D 5/74

(54) **ROTIERBARE SCHNEIDVORRICHTUNG EINES VERPACKUNGSVERSCHLUSSES**
ROTATABLE CUTTING DEVICE OF A PACKAGING CLOSURE
DISPOSITIF DE COUPE ROTATIF D'UNE FERMETURE D'EMBALLAGE

(30) Priorität: 29.04.2011 DE 102011017793
(43) Veröffentlichungstag der Anmeldung: 05.03.2014
(73) Patentinhaber: Robert Bosch GmbH, 70442 Stuttgart (DE)
(72) Erfinder: BARRON, Dan, CH-8200 Schaffhausen (CH)
(86) Internationale Anmeldenummer: PCT/EP2012/053648
(87) Internationale Veröffentlichungsnummer: WO 2012/146425

(56) Entgegenhaltungen:
- EP-A1- 1 533 240
- WO-A1-96/11850
- WO-A1-2008/148230
- CH-B1- 698 661
- DE-B3-102006 015 524

## Beschreibung

### Technisches Gebiet

Die vorliegende Erfindung beschreibt eine Schneidvorrichtung mit mindestens einem Schneidzahn aus thermoplastischem Kunststoff, wobei die Schneidvorrichtung mit einer auf einer Behälterhülle befestigbaren Verschlussvorrichtung wirkverbindbar ist und um eine Rotationsachse rotierbar ist, wobei der Schneidzahn von einer Kante der Schneidvorrichtung wegweisend mit einer Zahnspitze versehen ist, sodass die Schneidvorrichtung zur erstmaligen Öffnung der Behälterhülle einsetzbar ist.

Eine solche gattungsgemäße Schneidvorrichtung ist aus WO 96/11850 A1 bekannt.

### Stand der Technik

Verschlussvorrichtungen auf Behältern aus Kunststoff zur Lagerung von fliessfähigen Substanzen werden seit längerem in hohen Stückzahlen industriell gefertigt. Die Verschlussvorrichtungen weisen eine Schneidvorrichtung mit mindestens einem Schneidzahn auf, wobei die Schneidvorrichtung mit der Verschlussvorrichtung wirkverbunden ist. Durch die Betätigung einer Kappe, welche auf einem Ausgußstutzen befestigbar ist, wobei beide Bauteile Teil der Verschlussvorrichtung sind, wird die Schneidvorrichtung zur Öffnung der Behälterhülle eingesetzt. Die Schneidvorrichtung wird bei der ersten Öffnung rotiert und linear in Richtung der Behälterhülle bewegt, sodass die Schneidzähne die Behälterhülle aufschneiden und eine Öffnung freigeben.

Um eine Öffnung der Behälterhülle auch bei Verwendung von dicken Kunststoffschichten und laminierten Schichten umfassend Kunststoffe, Leichtmetall und Karton reproduzierbar zu erreichen, hat man sich in den letzten Jahren mit einer Zwischenlösung beholfen. Die Behälterhülle wurde im Bereich unterhalb des Ausgußstutzens mit einem leicht zerschneidbaren Folienflicken ausgestattet, in welchen die Schneidzähne der Schneidvorrichtung einfach einschneiden können.

Nachdem ein erster Schneidzahn die Behälterhülle durchstossen hat, wird die Behälterhülle von diesem oder weiteren Schneidzähnen mit angeordneter Schneide in Rotationsrichtung aufgeschnitten oder eher aufgerissen.

Alle Bauteile der Verschlussvorrichtung werden im Kunststoffspritzgussverfahren aus thermoplastischen Kunststoffen, in der Regel in einem Teil gespritzt, hergestellt. Durch einfaches Zusammenschieben der Bauteile in Längsrichtung der Rotationsachse der Verschlussvorrichtung wird die auf der Behälterhülle anbringbare, fertige Verschlussvorrichtung zusammengebaut.

Die Schneidvorrichtungen werden mittels einem zentralen Werkzeugkern und einer den Werkzeugkern umhüllenden Werkzeugform spritzgegossen. Die Kavität zwischen Werkzeugkern und Werkzeugform wird entsprechend zur Erzeugung der Schneidvorrichtung genutzt. In der Regel war die Ausnehmung für den zu erzeugenden Schneidzahn entweder in der Werkzeugform oder im Werkzeugkern eingeformt, wodurch eine schnelle und einfache Trennung der beiden Werkzeugteile ermöglicht wird. Die Trennebene oder -linie zwischen den beiden Werkzeugteilen fluchtet darum entweder mit der äusseren Fläche des Werkzeugkerns oder der inneren Fläche der Werkzeugform.

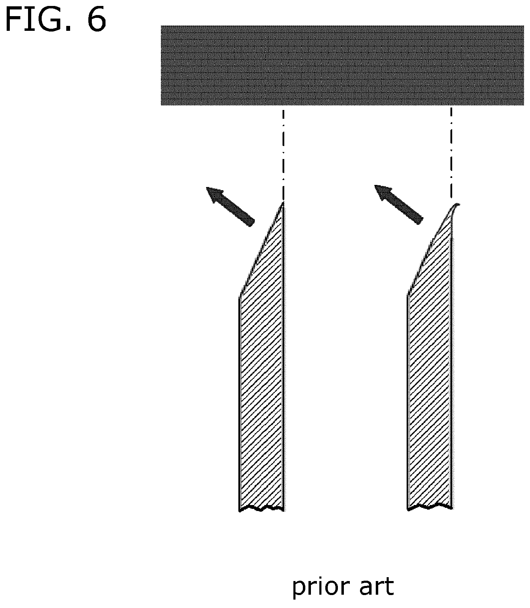

Der Schneidzahn wurde mit einer sich maximal verjüngenden Zahnspitze erstellt, wobei die Trennlinie direkt an der dünnsten Stelle der Zahnspitze verlaufend angeordnet ist. Aufgrund der Spitzengeometrie wurde eine geschwächte Zahnspitze erreicht, welche aufgrund der dünnen Materialschicht wie aus dem Stand der Technik bekannt und in Figur 6 dargestellt flexibel ist.

Neben einer aufgrund geringer Materialstärke schwach ausgebildeten Zahnspitze, treten auch Grate oder Schwimmhäute im Bereich der Trennlinie auf. Erhöhter Werkzeuginnendruck kann die Schliesskraft zwischen Werkzeugkern und Werkzeugform übersteigen, wodurch die Trennebene stark belastet wird. Die Kraft auf die Werkzeuge bzw. die Trennebene ist in Figur 6 mit Pfeilen angedeutet. Es kann zum sogenannten Atmen des Werkzeugs kommen und ein Teil des Spritzgussmaterials gelangt ungewünscht im Bereich der Trennlinie zwischen die beiden Werkzeugteile. Resultat ist ein Spritzgussgrat im Bereich der Trennlinie und damit an der äussersten Zahnspitze, welcher zu einer zusätzlichen Instabilität der Zahnspitze führt. Eine solche Zahnspitze ist nicht ausreichend fest und erreicht je nach verwendetem zu durchschneidenden Behälterhüllenmaterial keine oder nur eine schwache perforierende Wirkung und fördert das Verbiegen des Zahnes.

Da eine Vielzahl von Schneidzähnen verwendet wird, konnte man davon ausgehen, dass trotzdem eine ausreichend perforierende Wirkung erzielt werden konnte und die Behälterhülle zumindest teilweise durchgestochen wurde. Sobald die Schneidzähne die Behälterhülle durchstossen haben, wurde nur noch die Schneidwirkung der Schneidzähne ausgenutzt, welche unabhängig von der Formgebung der labilen Zahnspitze ist. Der Fachmann hat versucht durch Verwendung verschiedener formstabilerer Kunststoffe geeignete Schneidzähne zu entwickeln, um die Schneidwirkung zur verbessern.

Um dieses Problem zu lösen hat man das Behältnis aus einer hochfesten Kunststofffolie gefertigt, ein Loch ausgestanzt und dieses mit einer dünneren leichter perforierbaren Folie verschlossen und darauf die Verschlussvorrichtung aufgeschweisst. Dies ist aufwändig und kostspielig.

Aus dem Stand der Technik sind Schneidvorrichtungen mit unterschiedlich vielen Schneidzähnen mit unterschiedlichen Zahngeometrien bekannt. So sind beispielsweise in DE102006015524, CH698661, EP1533240, WO2008/148230 Schneidzähne beschrieben, welche spitze Zahnspitzen oder Zahnenden aufweisen, welche eine Schnittkante am Zahnende aufweisen, welche zu einem Punkt hin spitz zuläuft und in diesem endet. Dies wird deutlich, wenn man sich die Querschnittsfläche entlang eines Längsschnittes durch die bekannten Schneidzähne anschaut.

Die analysierten Schneidergebnisse von bekannten Schneidvorrichtungen zeigen stark ausgefranste eher ausgerissene Schnittlinien. Um den Inhalt eines Behälters aus der Verschlussvorrichtung wie gewünscht auszugiessen, ist aber eine verbesserte möglichst gleichmässige und glatte Schnittlinie gewünscht, wobei auf jeden Fall gewährleistet sein muss, dass kein Behälterhüllenmaterial abgetrennt wird und in den Behälter bzw. in den Inhalt gelangt.

### Darstellung der Erfindung

Die vorliegende Erfindung hat sich zur Aufgabe gestellt , Schneidzähne einer Schneidvorrichtung aus thermoplastischem Kunststoff für eine Verschlussvorrichtung zu schaffen, welche eine reproduzierbare Schneidwirkung aufweisen und zu einer gleichmäßigen und glatten Schnittlinie führen , auch ohne dabei spezielle Vorkehrungen an der Behälterhülle vorsehen zu müssen.

Diese Aufgabe erfüllen Schneidvorrichtungen mit den Merkmalen des Patentanspruches 1, wobei mindestens ein Schneidzahn mit einer äußerst stabilen Zahnspitze ausgestaltet ist. Erfindungsgemäße Schneidzähne weisen keine absolut spitz zulaufende äußere Zahnspitze auf, sondern sind robust und im Vergleich zu den Zahnspitzen des Stands der Technik stumpf ausgestaltet. Derartige Schneidzähne entfalten an einer Schneidvorrichtung angeordnet sukzessive eine praktisch spanabhebende Schneidwirkung, da jeder Schneidzahn einkerbend und nicht perforierend in die Behälterhülle spanabhebend eindringt und einen Schnitt erzeugt, wobei eine glatte saubere Schnittlinie erreichbar ist.

### Kurze Beschreibung der Zeichnungen

Ein bevorzugtes Ausführungsbeispiel des Erfindungsgegenstandes wird nachstehend im Zusammenhang mit den anliegenden Zeichnungen beschrieben.
- Figur 1a: zeigt eine Seitenansicht einer Verschlussvorrichtung auf einer Behälterhülle in geschlossener Position vor der ersten Öffnung, während
- Figur 1b: eine Seitenansicht einer Verschlussvorrichtung in der vollständig geöffneten Position mit vollständig herausgedrehter Schneidvorrichtung zeigt, wobei die Kappe noch nicht entfernt ist.
- Figur 2: zeigt einen diametralen Längsschnitt durch eine weitere Verschlussvorrichtung.
- Figur 3: zeigt eine perspektivische Darstellung der Schneidvorrichtung gemäß Figur 2, während
- Figur 4: einen Längsschnitt durch einen Schneidzahn gemäß der Linie A-A aus Figur 3 zeigt, wobei der Bereich der Zahnspitze vergrößert dargestellt ist.
- Figur 5: zeigt eine Schnittansicht eines mehrteiligen Spritzgusswerkzeuges im Bereich der Kavität, in welcher ein Schneidzahn erzeugt wurde.
- Figur 6: zeigt Längsschnitte bekannter Schneidzähne gemäß Stand der Technik vor und nach dem Gebrauch.

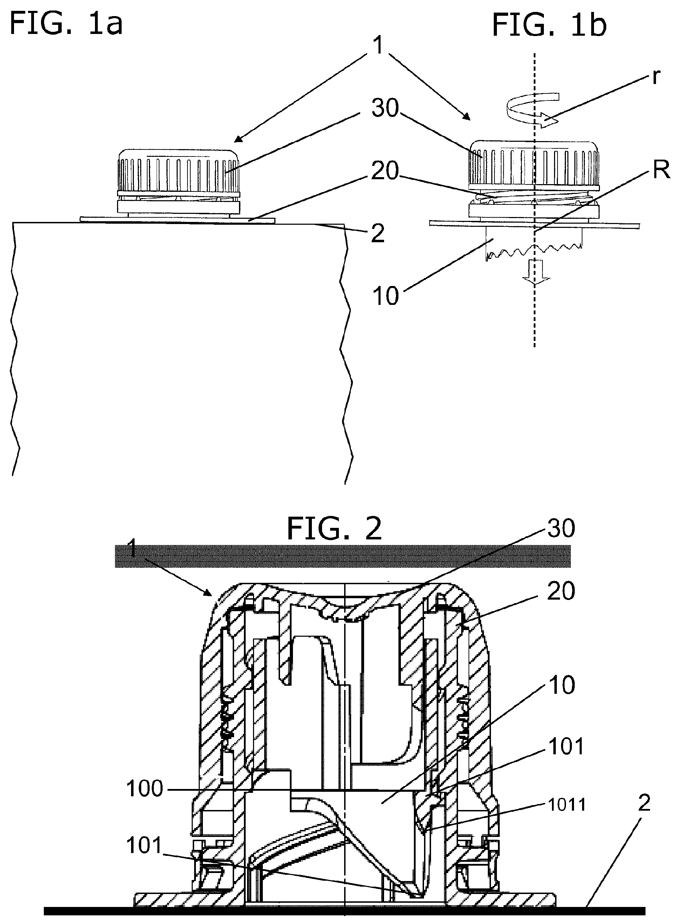

Eine Verschlussvorrichtung 1, umfassend einen Ausgussstutzen 20 mit einem Flansch und eine Kappe 30 ist auf einer Behälterhülle 2 aufgesetzt und somit mit einem Behälter unlösbar befestigt, wie in Figur 1a dargestellt. Die Behälterhülle 2 ist aus Kunststofffolie, Papier, Karton oder mehrlagigen laminierten Materialien, unter anderem auch Leichtmetallschichten aufweisend, hergestellt.

Eine Schneidvorrichtung 10 ist mit der Verschlussvorrichtung 1 wirkverbunden und innerhalb des Ausgussstutzens 20 um eine Rotationsachse R rotierbar und linear in Richtung der Behälterhülle 2 bewegbar gelagert. Bei Drehung der Kappe 30 in einer Rotationsrichtung r bewirkt ein Mechanismus, dass die Schneidvorrichtung 10 in die Behälterhülle 2 einschneidet und dadurch eine Öffnung in der Behälterhülle 2 beim ersten Öffnen der Kappe 30 der Verschlussvorrichtung 1 erzeugt.

Wie der Längsschnitt durch eine Verschlussvorrichtung 1 gemäß Figur 2 zeigt, weist die im Ausgussstutzen 20 bewegbar gelagerte Schneidvorrichtung 10 mehrere Schneidzähne 101 mit jeweils einer Zahnspitze 1011 auf. Durch an die Kappe 30 angeformte Mitnehmer wird die Schneidvorrichtung 10 innerhalb des Ausgussstutzens 20 geführt rotiert und in Richtung Behälterhülle 2 bewegt.

Die Schneidvorrichtung 10 ist im Wesentlichen zylindrisch geformt und weist einen Gewindeabschnitt 110 und eine Kante 100 auf, von welcher die Mehrzahl von Schneidzähnen 101 wegweisend abstehen. Bei Rotation der Kappe 30 wird die Schneidvorrichtung 10 in die mit ausgefülltem Pfeil angedeutete Bewegungsrichtung rotiert und in Richtung Behälterhülle 2 vorgetrieben. In der hier gezeigten Ausführungsform sind mehre Abschnitte mit Schneidzähnen 101 versehen.

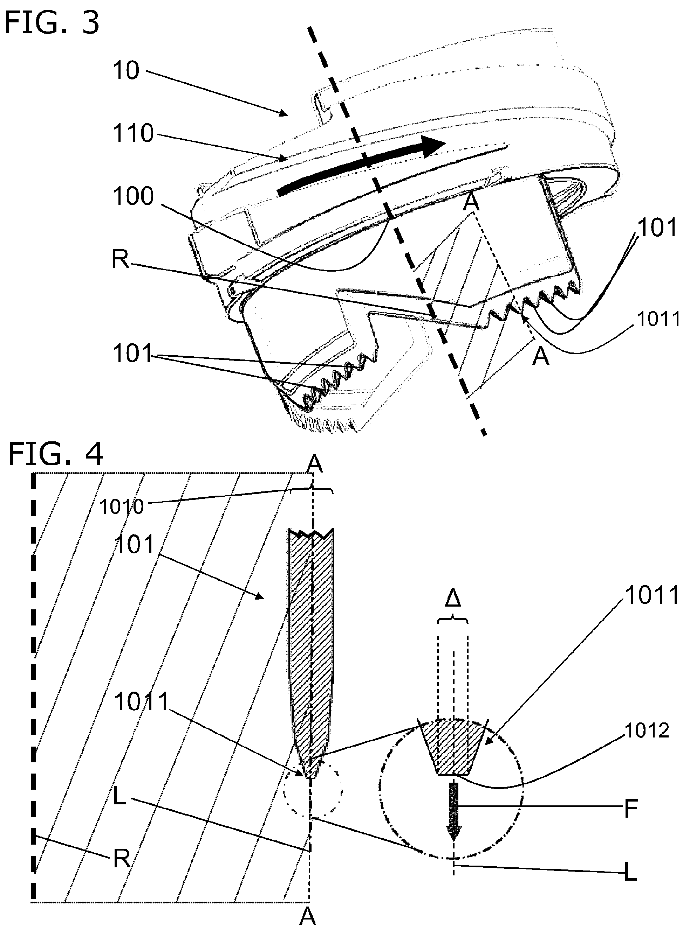

Für ein verbessertes Schneidergebnis ist die geometrische Formgebung der Schneidzähne 101 verantwortlich. Betrachtet man die Querschnittsfläche durch einen Schneidzahn 101 in einer radialen Schnittebene, wie in Figur 3 schraffiert angedeutet, dann erhält man den Längsschnitt durch einen Schneidzahn 101 gemäß Figur 4. Die Schnittebene verläuft in Figur 3 zwischen der Linie A-A bis zur Rotationsachse R der Schneidvorrichtung 10 in radialer Richtung, wodurch das dargestellte Parallelogramm definiert wird. Damit verläuft die Schnittebene durch die Zahnspitze 1011 und die Rotationsachse R der Schneidvorrichtung 10 und schneidet den Schneidzahn 101 entsprechend radial, sodass eine Flächennormale der Querschnittsfläche tangential zur Schneidvorrichtung 10 angeordnet ist.

Die äußere Zahnspitze 1011, welche der Kante 100 gegenüberliegend angeordnet ist, weist eine Schnittkante 1012 auf, welche die Zahnspitze 1011 begrenzt und eine Abstumpfung bewirkt. Die Schnittkante 1012 begrenzt die Zahnspitze 1011 mindestens teilweise.

In der in Figur 4 dargestellten Ausführungsform ist die Zahnspitze 1011 mit einer Schnittkante 1012 spiegelsymmetrisch zur Längsachse L des Schneidzahns 101 ausgebildet dargestellt. Es ist aber auch eine zur Längsachse L nicht spiegelsymmetrische Ausgestaltung möglich.

Die Schnittkante 1012 weist eine Normale F auf, welche mindestens annähernd parallel zur Rotationsachse R der Schneidvorrichtung 10 angeordnet ist.

Der Schneidzahn 101 wird von einem Maximalquerschnitt 1010, welcher üblicherweise Werte zwischen 0.5 mm und 1.5 mm annimmt, bis zu einem Wert Δ zwischen 20% und 50% des Maximalquerschnitts 1010 an seiner schmalsten Stelle verjüngt. Versuche haben gezeigt, dass in diesem Parameterbereich gute Schneidergebnisse erreichbar sind. Die Schnittkante 1012 bzw. die Zahnspitze 1011 sind dann trotzdem ausreichend stabil, um die Behälterhülle 2 reproduzierbar zu durchschneiden. Die Länge der Schnittkante 1012 ist jeweils kleiner als der Maximalquerschnitt 1010 des Schneidzahns 101 ausgebildet.

Auch die Anformung einer ebenen Begrenzungsfläche in Form eines Plateaus an der Zahnspitze 1011 ist möglich. Eine Begrenzungslinie des Plateaus wird dann von der Schnittkante 1012 gebildet, wobei das Plateau mindestens annähernd senkrecht zur Querschnittsfläche des Schneidzahns 101 verlaufend angeordnet ist.

Die Schnittkante 1012 schneidet bei Rotation und linearem Vortrieb der Schneidvorrichtung 10 in Richtung Behälterhülle 2 in diese ein. Die Zahnspitze 1011 kerbt oder schneidet mit der Schnittkante 1012 voran spanabhebend in die Behälterhülle 2 ein, wobei die Schnittkante 1012 kontinuierlich in Richtung Behälterhülle 2 vorgetrieben wird, solange bis die Schnittkante 1012 die Behälterhülle 2 durchstößt. Die Formgebung entspricht praktisch einem Werkzeug wie in der Metallverarbeitung bei Stechwerkzeugen üblich.

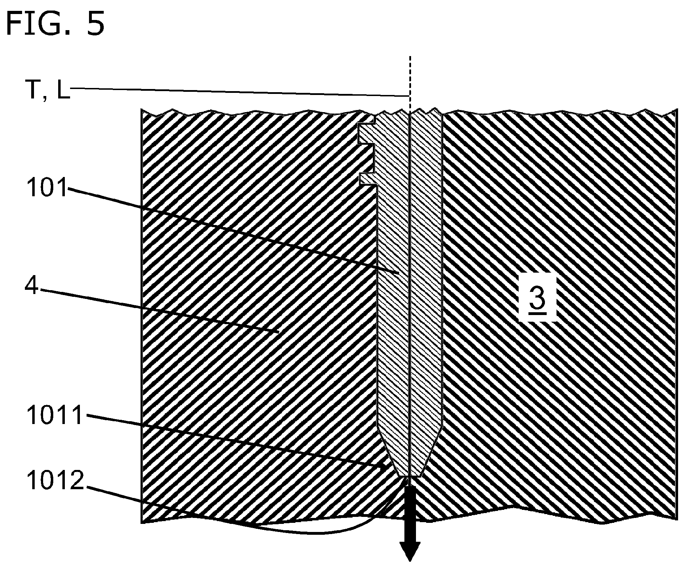

Die vereinfachte Herstellung der Verschlussvorrichtung 1 und im speziellen der Schneidvorrichtung 10 mit den Schneidzähnen 101 ist im Spritzgussverfahren möglich und wird schematisch anhand von Figur 5 erläutert.

Die Formteile, Schneidvorrichtung 10, Ausgussstutzen 20, Kappe 30 werden im Spritzgussverfahren aus Thermoplasten in einer Spritzgussvorrichtung hergestellt. Nach dem Plastifizieren der Thermoplaste, beispielsweise Polyethylen (PE) oder Polypropylen (PP) werden die Thermoplaste in ein mehrteiliges Werkzeug, umfassend einen Werkzeugkern 3 und eine Werkzeugform 4 eingespritzt, welches eine Kavität definiert, in welcher die späteren Formteile 10, 20, 30 erzeugt werden.

Das Werkzeug ist teilbar gestaltet und weist mindestens eine Trennebene oder -linie T auf, in der es zu öffnen ist. Wenn das Werkzeug geöffnet ist, kann erst der Werkzeugkern 3 herausgezogen werden, wodurch die Schneidvorrichtung 10 einseitig freigestellt ist, und das fertige Formteil wird aus dem Werkzeug entnommen. Dieses Entformen geschieht bevorzugt durch ein automatisches maschinenbetriebenes Entformungssystem, welches auch das Auswerfen bewerkstelligt.

Die Kavität zwischen Werkzeugkern 3 und Werkzeugform 4 ist derart ausgestaltet, dass die Trennebene T durch die abgestumpfte Zahnspitze 1011 und die Schnittkante 1012 verläuft. Die Trennebene T kommt auf einem ebenen Abschnitt zu liegen und es ist eine hohe Schließkraft gewährleistet. Die Werkzeuge können einfach aufeinander positioniert werden. Der Werkzeuginnendruck wirkt senkrecht auf die Verbindungsstelle zwischen den beiden Werkzeugteilen. Auch bei hohem Werkzeuginnendruck wird verhindert, dass Spritzgussmaterial in den Bereich der Trennlinie zwischen die beiden Werkzeugteile 3, 4 gelangt. Der dargestellte Pfeil in Figur 5 gibt die Richtung der Kraft des Spritzgussmaterials auf die Trennlinie T an.

Da keines der Werkzeugteile 3, 4 eine äussere Seitenwand der Zahnspitze 1011 fluchtend bildet, wobei die Trennlinie T ausreichend weit in Richtung Zentrum der Zahnspitze 1011 verlaufend angeordnet sein muss, sind Grate oder Schwimmhäute an der Zahnspitze 1011 bzw. am äusseren Rand der Zahnspitze 1011 oder der Schnittkante 1012 ausgeschlossen. Damit ist eine äusserst stabile Zahnspitze 1011 erreichbar.

## Patentansprüche

1. Schneidvorrichtung (10) aus thermoplastischem Kunststoff, wobei die Schneidvorrichtung (10) mit einer auf einer Behälterhülle (2) befestigbaren Verschlussvorrichtung (1) wirkverbindbar ist und um eine Rotationsachse (R) rotierbar ist, wobei mindestens ein Schneidzahn (101) von einer Kante (100) der Schneidvorrichtung (10) wegweisend mit einer Zahnspitze (1011) versehen ist, sodass die Schneidvorrichtung (10) zur erstmaligen Öffnung der Behälterhülle (2) einsetzbar ist,
**dadurch gekennzeichnet, dass**
die Querschnittsfläche des Schneidzahns (101), definiert durch eine radiale Schnittebene durch die Zahnspitze (1011) und die Rotationsachse (R) der Schneidvorrichtung (10), im Bereich der von der Kante (100) abgewandten Zahnspitze (1011) durch eine die äußere Zahnspitze (1011) begrenzende Schnittkante (1012) stumpf ausgestaltet ist, wobei die Schnittkante (1012) in einer zur Rotationsachse (R) senkrechten Ebene radial verläuft und die Schnittkante (1012) eine Normale (F) aufweist, welche mindestens annähernd parallel zur Rotationsachse (R) der Schneidvorrichtung (10) angeordnet ist, sodass die Schnittkante (1012) bei Rotation und linearem Vortrieb der Schneidvorrichtung (10) in Richtung Behälterhülle (2) in diese einschneiden kann.

2. Schneidzahn (101) gemäss Anspruch 1, wobei die Länge der Schnittkante (1012) kleiner als der Maximalquerschnitt (1010) des Schneidzahns (101) ist.

3. Schneidzahn (101) gemäss Anspruch 1, wobei die Länge der Schnittkante (1012) in einem Bereich von 20% bis 50%, bevorzugt von 30% des Maximalquerschnitts (1010) des Schneidzahns (101) liegt.

4. Schneidzahn (101) gemäss einem der vorhergehenden Ansprüche, wobei der Maximalquerschnitt (1010) des Schneidzahns (101) mindestens annähernd zwischen 0.5 mm und 1.5 mm liegt und die Länge der Schnittkante (1012) mindestens annähernd zwischen 0.1 mm und 0.3 mm liegt.

5. Schneidzahn (101) gemäss einem der vorhergehenden Ansprüche, wobei an der Zahnspitze (1011) ein Plateau auf der Höhe der Schnittkante (1012) gebildet ist, welches mindestens annähernd senkrecht zur Querschnittsfläche des Schneidzahns (101) aufgespannt ist.

## Claims

1. Cutting device (10) made of thermoplastic material, wherein the cutting device (10) is operatively connectable to a capping device (1) that is fastenable to a container covering (2), and is rotatable about a rotation axis (R), wherein at least one cutting tooth (101) is provided with a tooth tip (1011) in a manner pointing away from an edge (100) of the cutting device (10), such that the cutting device (10) is able to be used for opening the container covering (2) for the first time,
**characterized in that**
the cross-sectional area of the cutting tooth (101), defined by a radial section plane through the tooth tip (1011) and the rotation axis (R) of the cutting device (10), is configured in a blunt manner, in the region of the tooth tip (1011) facing away from the edge (100), by a cutting edge (1012) bounding the outer tooth tip, wherein the cutting edge (1012) has a normal (F) which is arranged at least approximately parallel to the rotation axis (R) of the cutting device (10), such that the cutting edge (1012) can cut into the container covering (2) upon rotation and linear advancement of the cutting device (10) in the direction of the container covering (2).

2. Cutting tooth (101) according to Claim 1, wherein the length of the cutting edge (1012) is less than the maximum cross section (1010) of the cutting tooth (101).

3. Cutting tooth (101) according to Claim 1, wherein the length of the cutting edge (1012) is in a range from 20% to 50%, preferably in a region of 30% of the maximum cross section (1010) of the cutting tooth (101).

4. Cutting tooth (101) according to one of the preceding claims, wherein the maximum cross section (1010) of the cutting tooth (101) is at least approximately between 0.5 mm and 1.5 mm and the length of the cutting edge (1012) is at least approximately between 0.1 mm and 0.3 mm.

5. Cutting tooth (101) according to one of the preceding claims, wherein a plateau is formed at the tooth tip (1011) at the level of the cutting edge (1012), said plateau being defined at least approximately perpendicularly to the cross-sectional area of the cutting tooth (101).

## Revendications

1. Dispositif de coupe (10) en plastique thermoplastique, le dispositif de coupe (10) pouvant être mis en liaison fonctionnelle avec un dispositif de fermeture (1) pouvant être fixé sur une enveloppe de récipient (2) et pouvant tourner autour d'un axe de rotation (R), au moins une dent de coupe (101) tournée à l'opposé d'une arête (100) du dispositif de coupe (10) étant pourvue d'une pointe de dent (1011) de telle sorte que le dispositif de coupe (10) puisse être utilisé pour la première ouverture de l'enveloppe de récipient (2),
**caractérisé en ce que**
la surface en section transversale de la dent de coupe (101), définie par un plan de coupe radial à travers la pointe de dent (1011) et l'axe de rotation (R) du dispositif de coupe (10), est configurée sous forme émoussée dans la région de la pointe de dent (1011) opposée à l'arête (100) par une arête de coupe (1012) limitant la pointe de dent extérieure (1011), l'arête de coupe (1012) s'étendant radialement dans un plan perpendiculaire à l'axe de rotation (R) et l'arête de coupe (1012) présentant une normale (F) qui est disposée au moins approximativement parallèlement à l'axe de rotation (R) du dispositif de coupe (10), de telle sorte que l'arête de coupe (1012), lors de la rotation et de l'avance linéaire du dispositif de coupe (10), puisse entailler dans l'enveloppe de récipient (2) dans la direction de celle-ci.

2. Dent de coupe (101) selon la revendication 1, dans laquelle la longueur de l'arête de coupe (1012) est inférieure à la section transversale maximale (1010) de la dent de coupe (101).

3. Dent de coupe (101) selon la revendication 1, dans laquelle la longueur de l'arête de coupe (1012) est située dans une plage de 20 % à 50 %, de préférence de 30 % de la section transversale maximale (1010) de la dent de coupe (101).

4. Dent de coupe (101) selon l'une quelconque des revendications précédentes, dans laquelle la section transversale maximale (1010) de la dent de coupe (101) est comprise au moins approximativement entre 0,5 mm et 1,5 mm et la longueur de l'arête de coupe (1012) est comprise au moins approximativement entre 0,1 mm et 0,3 mm.

5. Dent de coupe (101) selon l'une quelconque des revendications précédentes, dans laquelle un plateau est formé au niveau de la pointe de dent (1011) à la hauteur de l'arête de coupe (1012), lequel s'étend au moins approximativement perpendiculairement à la surface en section transversale de la dent de coupe (101).
